# FASCICULE DE BREVET EUROPEEN

(11) **EP 0 722 656 B1**
(45) Date de publication et mention de la délivrance du brevet: **29.12.1997**
(21) Numéro de dépôt: 96400142.4
(22) Date de dépôt: 22.01.1996
(51) Int. Cl.: A01K 27/00, A01K 13/00

(54) **Dispositif à libération contrôlée de substances chimiques, destiné à être fixé sur un animal et procédé de préparation dudit dispositif**
An einem Tier anbringbare Vorrichtung zur kontrollierten Wirkstoffabgabe und Verfahren zur deren Herstellung
Device for controlled release of drugs, designed for attachment to or on an animal and method for producing such a device

(30) Priorité: 23.01.1995 FR 9500712
(43) Date de publication de la demande: 24.07.1996
(73) Titulaire: VIRBAC S.A., F-06516 Carros Cedex (FR)
(72) Inventeur: Karst, Christian, F-06270 Villeneuve-Loubet (FR); Gozlan, Thierry, F-06400 Cannes (FR); Derrieu, Guy, F-06800 Cagnes-sur-Mer (FR); Castelli, Luc, F-06700 Saint Laurent du Var (FR)
(74) Mandataire: Orès, Bernard

(56) Documents cités:
- EP-A- 0 436 428
- DE-C- 882 016
- FR-A- 2 386 253
- FR-A- 2 447 679
- FR-A- 2 600 490

## Description

La présente invention est relative à un dispositif apte à être associé à un collier de contention ou d'ornement ou à tout autre support pour animaux, destiné à permettre la libération contrôlée et éventuellement continue et complète, de substances chimiques y compris des médicaments, et ce, pendant des périodes plus ou moins longues, continues ou discontinues, ladite libération de substances actives suivant une cinétique déterminée, - à savoir la libération d'une dose journalière constante tout au long de la durée de validité du dispositif, - s'effectuant à partir d'une matrice polymérique insoluble vers la zone appropriée d'un organisme animal.

La présente invention est également relative au procédé d'obtention dudit dispositif.

On connaît déjà de très nombreux systèmes permettant la libération réglée et programmée de substances actives.

On connaît également des systèmes solides qui peuvent être appliqués par contact, notamment sur la peau.

On peut citer en particulier des dispositifs aptes à libérer progressivement un insecticide de contact destiné à la protection des animaux contre les parasites, et en particulier contre les ectoparasites. La plupart de ces dispositifs sont constitués par un insecticide inclus dans une matrice en matière plastique. La libération lente du produit ectoparasiticide (sous forme de vapeur ou de dépôt sur les poils de l'animal), permet une protection efficace contre les parasites pendant plusieurs mois.

De très nombreux brevets décrivent de tels dispositifs :
- les Brevets français 2 269 859, 2 307 466 et 2 447 679 aux noms de P.R. DICK et al. décrivent des dispositifs adaptés à la protection des animaux contre les ectoparasites ;
- le Brevet Européen 0 436 428, au nom de la Demanderesse, décrit un dispositif permettant la libération progressive, programmée, uniforme et totale d'une ou plusieurs substances ou principes actifs ;
- d'autres Brevets décrivent des compositions ectoparasiticides : le Brevet français 2 213 014 au nom de R. ARIES, les Brevets français 2 374 853, 2 386 253 et 2 386 254 au nom de BAYER AKTIENGESELLSCHAFT et les Brevets français 2 370 572 et 2 392 606 au nom de A.H. ROBINS COMPANY, INCORPORATED.

L'ensemble des dispositifs décrits dans ces documents, essentiellement destinés à la réalisation de colliers antiparasitaires, systèmes qui permettent d'appliquer, par contact cutané, des substances chimiques, présentent toutefois un certain nombre d'inconvénients :
- ils ne libèrent pas, dans la plupart des cas, d'une manière constante le principe actif qu'ils contiennent ; en effet, la quantité libérée au début de l'utilisation est très importante, puis elle va décroître très rapidement pour devenir nulle; cela est essentiellement dû à la géométrie du système, qui est monobloc et épais, notamment pour pouvoir garantir une activité sur de très longues périodes, compte-tenu d'un emploi unique,
- ils se présentent généralement sous la forme d'une lanière fixée principalement au cou des animaux et ne permettent donc pas de doser la quantité de principe actif à appliquer à l'animal, en fonction de son poids ; en effet, la quantité de principe actif est donnée par la longueur du collier, donc par le tour de cou de l'animal et non par son poids. Compte-tenu de la diversité des animaux, il est évident que le tour de cou de l'animal n'est pas proportionnel à son poids,
- ils ne peuvent pas servir de collier de contention, par exemple pour tenir l'animal en laisse, ce qui nécessite le port d'un deuxième collier,
- de plus, ce genre de dispositif ne répond pas à tous les besoins sanitaires de l'animal, notamment lorsque il est nécessaire d'administrer plusieurs substances par voie percutanée, simultanément.

Bien que ces différents dispositifs présentent ces inconvénients, le collier reste toutefois, un des meilleurs systèmes d'application topique de substances actives, par voie percutanée, chez l'animal ; en effet, la voie percutanée est très intéressante pour soigner, protéger, prévenir des agressions externes, et même internes, un animal, car non traumatisante et facile à utiliser. En outre, le collier permet à la fois une administration systémique et une administration par contact du ou des principes actifs qu'il contient : la face interne du collier, en contact avec la peau permet le transfert du ou des principes actifs au travers de la peau, tandis que la face externe permet de couvrir la totalité du pelage, en raison des facteurs intervenants dans le transfert du principe actif du collier vers l'animal : mécanique lorsque l'animal bouge, mais aussi chaleur transmise par l'animal au collier, d'où l'importance de ce dernier d'être au contact avec la peau.

La présente invention s'est par conséquent fixé pour but de pourvoir à un dispositif qui répond mieux aux nécessités de la pratique que les dispositifs visant au même but antérieurement connus, notamment :
- en ce qu'il permet d'ajuster parfaitement la dose de principe(s) actif(s) au poids corporel de l'animal à soigner ou à protéger,
- en ce qu'il permet de régler la durée de protection, et de respecter le schéma thérapeutique imposé par la substance active,
- en ce qu'il est d'utilisation aisée, tant pour le mettre que pour le retirer,
- en ce qu'il peut être réutilisé,
- et en ce qu'il permet l'administration, à la demande et en particulier simultanément, de plusieurs substances.

La présente invention a pour objet un dispositif destiné à être fixé sur un animal, du type comprenant au moins une matrice polymérique incluant au moins une substance active, apte à être libérée à partir dudit dispositif vers une zone appropriée d'un organisme animal, lequel dispositif est caractérisé :
- en ce qu'il est constitué d'au moins un élément tubulaire à section quelconque, comportant au moins une couche de matrice polymérique souple contenant au moins une substance active,
- en ce que la longueur dudit élément tubulaire est réglable, pour ajuster la dose journalière de substance active, au poids de l'animal,
- en ce que le rapport entre la surface externe dudit élément tubulaire et l'épaisseur de sa paroi est le plus grand possible, pour l'obtention d'une élimination linéaire de la substance active et
- en ce que ledit élément tubulaire est apte à être associé à n'importe quel support souple ou rigide pour animaux.

La composition de la ou des couche(s) polymérique(s) du dispositif incluant la ou les substance(s) active(s) est choisie pour obtenir une activité sur une durée donnée.

Dans la présente invention, on désigne par face interne dudit dispositif, la partie de la surface extérieure de l'élément tubulaire directement en contact avec l'animal et par face externe, la partie de la surface extérieure de l'élément tubulaire qui n'est pas en contact direct avec l'animal.

Pour obtenir le rapport le plus grand possible entre la surface externe dudit élément tubulaire, et l'épaisseur de sa paroi, on choisira de préférence la paroi la plus mince possible.

Selon en particulier la taille de l'animal, le type de principe actif à administrer, la quantité journalière requise, la durée imposée, et la composition de la matrice polymérique qui influent sur la longueur et l'épaisseur de l'élément tubulaire ou partie de l'élément tubulaire contenant le principe actif, l'épaisseur dudit élément tubulaire est de préférence comprise entre 0,1 mm et 10 mm, et généralement entre 0,5 mm et 2,5 mm. La largeur ou diamètre de l'élément tubulaire est choisi afin que ce dernier soit adaptable aux différents supports présents sur le marché.

Parmi les supports sur lesquels on peut adapter le dispositif selon l'invention, on peut citer les colliers de contention ou d'agrément, les harnais, les licous, les différentes sangles, ou les perchoirs pour oiseaux, et de manière générale, tout support pouvant être enfilé à l'intérieur de la structure tubulaire d'un dispositif conforme à l'Invention.

Un tel dispositif présente un certain nombre d'avantages:
- il permet d'ajuster parfaitement la dose de principe actif au poids corporel de l'animal,
- sa forme particulière (élément tubulaire à section quelconque et dont la paroi est de faible épaisseur) permet une élimination linéaire du principe actif,
- il ne provoque aucun dommage pour le support qui peut être réutilisé ; en effet, le support porteur (collier, par exemple), associé au dispositif et le dispositif lui-même ne sont nullement endommagés ; ainsi, le dispositif peut être réutilisé afin de ne pas maintenir l'animal sous une médication plus longue que nécessaire, par exemple utilisation aisée d'un sédatif pour les déplacements aller et retour d'un animal lors de voyages pour aller sur un lieu de villégiature ; ainsi le traitement ne sera pas maintenu pendant toute la durée du séjour,
- il est facile de mettre et de retirer le dispositif du support pour animaux (collier, par exemple) ; en conséquence, la durée du traitement est aisément respectée et les traitements séquencés peuvent être ainsi suivis scrupuleusement,
- il a l'avantage également d'être le plus universel possible, c'est-à-dire adaptable à l'ensemble des supports disponibles sur le marché, en raison notamment de sa souplesse, rendue possible notamment par la faible épaisseur de la paroi dudit élément tubulaire.

De manière inattendue, le dispositif conforme à l'invention :
. permet de prévoir une médication personnalisée pour chaque animal afin de le soigner et/ou de le protéger. Il suffit pour cela de positionner un dispositif sur le collier de l'animal. Plusieurs traitements peuvent être appliqués simultanément ou modulés suivant chacun de leurs schémas thérapeutiques et
. permet de respecter la dose requise, en fonction de la teneur en principe actif du dispositif et du poids de l'animal, en réglant la longueur du dispositif.

Selon un mode de réalisation avantageux dudit dispositif, il comporte une seule couche de matrice polymérique souple, dans laquelle au moins une substance active est incluse.

Selon un autre mode de réalisation avantageux dudit dispositif, il comporte au moins deux couches de matrice polymérique souple (couche polymérique extérieure et couche polymérique intérieure).

Selon une disposition avantageuse de ce mode de réalisation, au moins une substance active est incluse dans la couche extérieure (dont une partie ou face interne est directement en contact avec l'animal).

Selon une autre disposition avantageuse de ce mode de réalisation, au moins une substance active est incluse dans la couche intérieure (directement en contact avec le support), et ce notamment pour permettre une meilleure régulation de la libération de ladite substance active, si nécessaire (passage de la substance active de la couche intérieure vers la couche extérieure, avant le transfert proprement dit à l'animal).

Dans la présente invention, on distingue d'une part, les faces du dispositif (face interne et face externe), comme précisé ci-dessus, et d'autre part, la position des couches de matrice polymérique, dans ledit dispositif ; lorsqu'il comprend, par exemple deux couches : la couche située vers l'extérieur, est dénommée couche extérieure et la couche située vers l'intérieur est dénommée couche intérieure : dans un tel cas, la couche extérieure, comprendra une face interne (directement en contact avec l'animal) et une face externe.

Selon encore une autre disposition avantageuse de ce mode de réalisation, au moins une substance active est incluse dans chacune des deux couches de matrice polymérique.

Selon encore une autre disposition de ce mode de réalisation, un dispositif conforme à l'Invention peut comprendre trois couches de matrice polymérique, à savoir une couche extérieure et une couche intérieure, telles que définies ci-dessus, séparées par une couche intermédiaire : avantageusement, le ou les principes actifs se trouvent dans la couche intermédiaire.

Conformément à l'invention, une ou plusieurs substance(s) active(s) peuvent être réparties de manière homogène, dans une ou plusieurs couches de matrice polymérique, et/ou une ou plusieurs substances actives peuvent être concentrées préférentiellement au niveau d'un ou plusieurs fragments d'une ou plusieurs couches de matrice polymérique.

Conformément à l'invention, au moins une couche de matrice polymérique peut comprendre en outre au moins l'un des adjuvants suivants : plastifiant, lubrifiant, stabilisant, substance de charge, colorant, pigment, antioxydant, agent porogène, désodorisant, parfum.

Par exemple, une couche de matrice polymérique chargée en substance(s) active(s), peut comprendre également au moins un polymère, mélange de polymères ou copolymère, au moins un plastifiant, au moins un lubrifiant, au moins un stabilisant et au moins une substance de charge.

De manière avantageuse, les plastifiants sont des esters liquides dont la tension de vapeur est inférieure à 0,0001 mm/Hg à 25°C. Comme exemples non limitatifs de plastifiants, il peut être cité les phtalates de diéthyle, de diéthyl-2-hexyle, de diméthyle, de dipropyle, de dibutyle, de dihexyle, de dioctyle et de didécyle, les adipates d'isobutyle, de diisobutyle, de dibutyle, de diéthyl-2-hexyle, de diamyle, de dinonyle, de dioctyle et de didécyle, les sébaçates de dipropyle, de dibutyle, de dibenzyle et de dioctyle, les citrates de diéthyle, de dipropyle, de dibutyle et d'acétyltributyle, les phosphates de triphényle et de tricrésyle et les triglycérides.

Des plastifiants préférés sont l'adipate d'isobutyle, l'adipate de diéthyl-2-hexyle, l'adipate de diisobutyle, le phtalate de diéthyl-2-hexyle, le phtalate de dibutyle et le citrate d'acétyltributyle.

Les lubrifiants convenables sont choisis en fonction du mélange à transformer et du procédé utilisé ; en particulier, pour le polychlorure de vinyle et l'extrusion, les lubrifiants préférés sont les stéarates de calcium, magnésium ou potassium, les laurates et palmitates de ces mêmes métaux et l'acide stéarique.

Les stabilisants convenables sont choisis en fonction du polymère ou des mélanges de polymères ; en particulier, pour le polychlorure de vinyle, les stabilisants préférés sont les époxydes tels que l'épichlorhydrine et l'huile de soja époxydée, les savons métalliques de métaux tels que le calcium et le zinc.

Les substances de charge sont de préférence sélectionnées parmi les charges minérales telles que sulfate de baryum, carbonate de calcium, zéolithes, diatomées, kaolin, talc, silice, silicate de calcium hydraté, trioxyde d'antimoine, oxyde de titane, les fibres textiles naturelles ou synthétiques et la sciure de bois.

La matrice polymérique peut être réalisée à partir de pratiquement n'importe quel polymère ou copolymère plastique souple. Des polymères convenant à la réalisation de cette matrice pourront être notamment choisis dans le groupe qui comprend les polymères vinyliques, les polyéthylènes, les polypropylènes, les polyacétates, les polyuréthanes et les polyacétates de vinyle.

Le choix de ladite matrice dépend du(des) principe(s) actif(s), de la durée d'activité souhaitée et de la dose journalière de principe(s) actif(s) à libérer.

Dans le cas où le dispositif comporte au moins deux couches, les matrices polymériques constituant chacune de ces couches, ainsi que les adjuvants qu'elles contiennent, peuvent être de nature identique ou différente

Selon encore un autre mode de réalisation avantageux, le dispositif comprend une trame de renfort.

Ladite trame de renfort peut être placée sur la couche extérieure ou bien, dans le cas où ledit dispositif comprend au moins deux couches de matrice polymérique, ladite trame de renfort est prise en sandwich entre deux desdites couches.

De manière plus précise, le ou les principes actifs sont choisis plus particulièrement dans les groupes qui comprennent :
- des insecticides, tels que par exemple, le diazinon, le bendiocarb, l'amitraz, les pyrèthres naturelles, les pyréthrinoïdes de synthèse tels que la perméthrine, la phénothrine, la lambda-cyhalothrine, le pipéronyl butoxyde,
- des ovicides ou larvicides, tels que par exemple, le fenoxycarb, le méthoprène, le pyriproxyfène,
- des répulsifs, tels que par exemple, la citronnelle, N,N-diéthyl-m-toluamidine,
- des antiémétiques, le dimenhydrinate, le diphenhydramine, la prométhazine, la L hyoscine,
- des antifongiques et/ou antibactériens tels que par exemple, la nanaomycine, le miconazole, l'enilconazole, le ketonazole, le chlorocrésol, le chloroxylenol, la chlorhexidine et ses dérivés,
- les antibiotiques, tels que par exemple, les avermectines telles que l'ivermectine, l'abamectine, les milbémycines telles que la moxidectine, la doramectine,
- les sulfamides, tels que par exemple, la sulfadimidine, la sulfaméthazine, la sulfaméthoxypyridazine, le sulfaméthoxazol, le triméthoprim, l'orméthoprim,
- les quinolones et analogues, telles que par exemple, l'acide oxolinique, la fluméquine,
- les antiinflammatoires, tels que par exemple, le piroxicam, le flobufen, le tepoxaline, le nimesulide,
- les vitamines, telles que par exemple, la vitamine A ou ses dérivés, la vitamine E ou ses dérivés, la vitamine F et ses esters, les acides gras essentiels,
- les déodorants naturels ou de synthèse,
- les parfums.

Le dispositif conforme à l'invention peut présenter de nombreuses variantes tant en ce qui concerne la forme de sa section (circulaire, elliptique, semi-circulaire, lenticulaire, carrée, rectangulaire) qu'en ce qui concerne le nombre de couches polymériques qu'il comprend, pourvu qu'il ait la forme d'un élément tubulaire souple.

L'épaisseur et la nature de la paroi dudit élément tubulaire dépendent du ou des principes actifs envisagés et de la durée d'activité souhaitée. Néanmoins, il sera préféré une paroi mince afin de disposer d'un dispositif souple et élastique adaptable le plus parfaitement possible à l'ensemble des supports du marché.

De manière avantageuse, la couche polymérique ou la couche polymérique extérieure, dans le cas où le dispositif comprend plusieurs couches, comprend un polymère, au moins un plastifiant, au moins un principe actif et au moins 5 % de substance de charge, conformément au Brevet européen 0 436 428.

Le dispositif conforme à l'invention peut être préparé par coulée, injection moulage ou par extrusion, de manière connue par l'Homme de métier, par mélange et chauffage des différents composants.

Le dispositif conforme à l'invention peut également être préparé conformément au procédé décrit et revendiqué dans le Brevet européen 0 436 428 et comprend notamment :
(a) la préparation d'une poudre comprenant une matrice polymérique ou résine, dans laquelle au moins un plastifiant approprié se trouve intégralement absorbé, par projection à chaud dudit plastifiant, préalablement chauffé sur ladite matrice maintenue à température, pour saturer ladite résine en plastifiant ;
(b) le refroidissement de la poudre obtenue en (a) à une température inférieure à 30°C ;
(c) le mélange à froid d'au moins un support de principe actif avec la poudre obtenue en (b), puis
(d) l'addition, à une température inférieure à 30°C, du/des principes actifs ; et
(e) mise sous la forme d'un élément tubulaire.

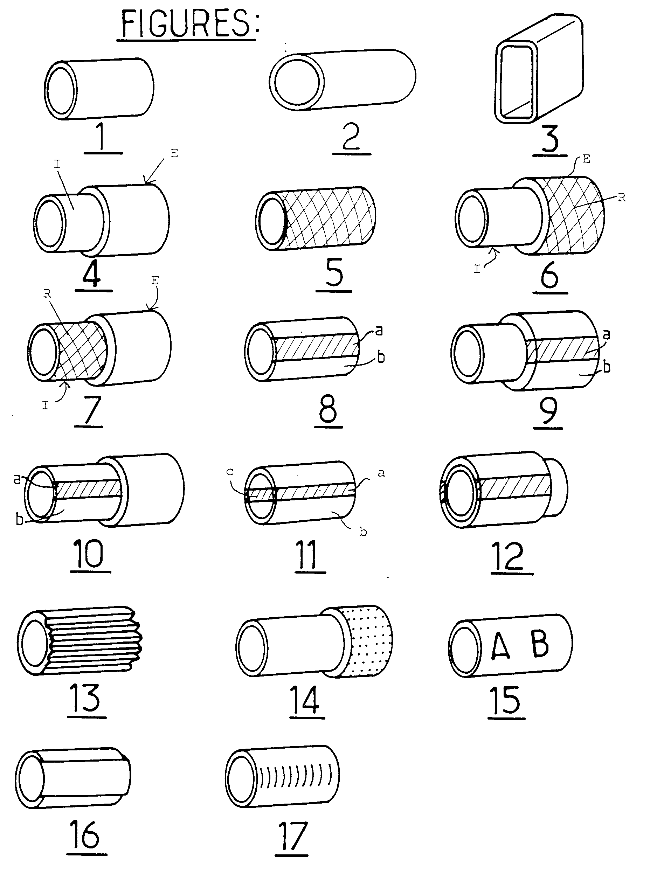

Outre les dispositions qui précèdent, l'invention comprend encore d'autres dispositions, qui ressortiront de la description qui va suivre, qui se réfère à des exemples de mise en oeuvre du procédé objet de la présente invention ainsi qu'aux dessins annexés, dans lesquels les figures 1 à 17 illustrent différents modes de réalisation du dispositif tubulaire selon l'invention.

Il doit être bien entendu, toutefois, que ces exemples sont donnés uniquement à titre d'illustration de l'objet de l'invention, dont ils ne constituent en aucune manière une limitation.

Conformément à l'invention, ledit dispositif peut se présenter sous l'une quelconque des formes suivantes :
- un cylindre creux mono-couche, de section ovale (fig. 1) à ronde (fig. 2), voir en forme de parallélépipède (fig. 3),
- un cylindre creux composé de deux couches concentriques de même longueur (couche extérieure E et couche intérieure I (fig. 4)), de même composition ou non, le ou les principes actifs pouvant se trouver dans l'une et/ou l'autre couche, associés ou non (le dispositif est présenté avec seulement la moitié de la couche extérieure afin de visualiser la couche intérieure),
- un cylindre creux composé d'une ou deux couches, qui peut être renforcé par un tissage ou tout autre renfort R de surface (fig. 5 et 6) ou pris en sandwich entre les deux couches (fig. 7),
- un cylindre creux composé de deux parties (a) et (b), soit avec une seule couche (fig. 8) soit avec deux couches (fig. 9 et 10), le ou les principes actifs se trouvant préférentiellement dans la partie(a), la section du dispositif étant préférentiellement ovale ou parallélépipédique,
- un cylindre creux composé de trois parties (a), (b) et (c) soit avec une seule couche (fig. 11) soit avec deux couches (fig. 12), le ou les principes actifs se trouvant associés ou séparés, préférentiellement dans les parties (a) et (c), la section du dispositif étant préférentiellement ovale ou parallélépipédique,
- un cylindre creux composé d'une ou deux couches pouvant porter sur sa partie extérieure différents motifs décoratifs (fig. 13 et 14) ou inscriptions (fig. 15),
- un cylindre creux composé de deux ou trois parties (a), (b) et/ou (c), soit avec une seule couche (comme la fig. 11) soit avec deux couches (comme la fig. 12), les parties (a), (b) et (c) pouvant être d'épaisseur différentes les unes par rapport aux autres (fig. 16),
- un cylindre creux composé d'une ou deux couches pouvant porter sur sa partie extérieure une échelle graduée facilitant l'ajustement de la longueur du dispositif, donc de la dose active, au poids du porteur (fig. 17).

Lorsque le dispositif est composé d'au moins deux couches, ces couches peuvent être de nature différente, ce qui permet par exemple :
- d'obtenir une étanchéité sélective permettant d'orienter la sortie du ou des principes actifs, et/ou
- de prolonger l'activité du dispositif, et/ou
- de réguler la sortie du ou des principes actifs, et/ou
- d'obtenir une plus grande résistance de l'ensemble, etc...

Le dispositif peut également être composé de trois couches concentriques : une couche interne (a) qui peut être étanche ou poreuse, une couche intermédiaire (b) qui comprend le ou les principes actifs, une couche externe (c) poreuse, qui permet de réguler la sortie des principes actifs.

### EXEMPLE 1 :

On prépare par extrusion, de manière classique, des dispositifs cylindriques creux souples, identiques à ceux de la figure 1, de section ovale (grand diamètre extérieur de l'ovale : 25 mm, grand diamètre intérieur de l'ovale : 23 mm, petit diamètre extérieur de l'ovale : 12 mm, petit diamètre intérieur de 10 mm), de 50 mm de long et 1,0 mm d'épaisseur de paroi et d'un poids de 7 grammes, contenant 20% en poids de diazinon (thionophosphate de O,O-diéthyl O-(isopropyl-2 méthyl-4 pyrimidinyl-6), 3,5% de stabilisants et lubrifiants, 10,5% de plastifiant (adipate d'isobutyle), 35% de charge (carbonate de calcium) et 31% de chlorure de polyvinyle.

La cinétique de libération du diazinon a été réalisée en faisant porter 6 dispositifs associés à des colliers en cuir par des chiens de race Beagle d'un poids compris entre 9 et 11 kg. Deux échantillons de 200 mg de dispositif sont prélevés à l'aide d'un emporte-pièce l'un sur la face interne et l'autre sur la face externe sur chaque animal à des temps différents et analysés par chromatographie liquide haute performance.

Dans le Tableau I ci-dessous, les moyennes des valeurs du diazinon en pourcentage restant sur la face interne et sur la face externe des dispositifs sont représentées.

**TABLEAU I**

| Prélèvement sur la face | Temps donné en jours | | | | | | | |
|---|---|---|---|---|---|---|---|---|
| | 0 | 7 | 14 | 28 | 42 | 56 | 70 | 84 |
| interne | 100 | 88,6 | 78,2 | 60,8 | 45,1 | 32,2 | 18,4 | 5,2 |
| externe | 100 | 94,1 | 86,9 | 70,5 | 53,2 | 37,9 | 23,4 | 9,6 |

### EXEMPLE 2 :

De façon similaire à l'exemple 1, des dispositifs cylindriques creux souples identiques à ceux de la figure 4, de section ovale (grand diamètre extérieur de l'ovale : 25 mm, grand diamètre intérieur de l'ovale : 22,6 mm, petit diamètre extérieur de l'ovale : 12 mm, petit diamètre intérieur de l'ovale : 9,6 mm), de 50 mm de long et 1,2 mm d'épaisseur de paroi et d'un poids de 8 grammes, ont été réalisés avec la couche intérieure inerte composée de 3,5% de stabilisants et lubrifiants, 37,5% de plastifiant (phtalate de diéthyl-2 hexyle) et 59% de chlorure de polyvinyle et la couche extérieure active contenant 15% en poids d'amitraz (N-methyl-N'-2,4-xylyl-N-(N-2,4-xylylformimidoyl) formamidine), 3,5% de stabilisants et lubrifiants, 24,5% de plastifiant (adipate de diéthyl-2 hexyle), 10% de charge (carbonate de calcium) et 47% de chlorure de polyvinyle.

L'efficacité antiparasitaire a été prouvée en faisant porter de façon discontinue 6 dispositifs associés à des colliers en cuir par des chiens de race Beagle d'un poids compris entre 9 et 11 kg. Les dispositifs étaient portés par les animaux pendant trois jours à 14 jours d'intervalle. Le cycle a été répété 6 fois soit sur trois mois. Le deuxième jour de port 50 tiques étaient mises sur chaque animal, le troisième jour les dispositifs étaient retirés et replacés dans des sachets spéciaux bloquant l'élimination de l'insecticide pour être réutilisés ensuite. Ce même jour les tiques vivantes sur l'animal ou dans sa cage étaient dénombrées.

Aucune tique vivante ou morte n'a été retrouvée sur les animaux ; seules trois tiques vivantes ont été dénombrées dans les cages au cours des six périodes et pour l'ensemble des animaux.

### EXEMPLE 3 :

De façon similaire à l'exemple 1, des dispositifs cylindriques creux souples identiques à ceux de la figure 8 mais de section en forme de parallélépipède comme illustré à la figure 3 (dimension extérieure du grand côté du parallélépipède : 25 mm ; dimension intérieure du grand côté du parallélépipède : 23 mm, dimension extérieure du petit côté du parallélépipède : 12 mm, dimension intérieure du petit côté du parallélépipède : 10 mm), de 100 mm de long et de 1,0 mm d'épaisseur de paroi et d'un poids de 14 grammes, ont été réalisés. La partie (b), corps inerte du dispositif, est composée de 3,5% de stabilisants et lubrifiants, 37,5% de plastifiant (phtalate de diéthyl-2 hexyle) et 59% de chlorure de polyvinyle, la partie (a), bande centrale active de 6 mm de large est composée de 5% de L hyoscine (scopolamine), 3,5% de stabilisants et lubrifiants, 30% de plastifiant (phtalate de diéthyl-2 hexyle), 20% de charge (talc) et 41,5% de chlorure de polyvinyle.

L'efficacité antiémétique a été prouvée en faisant porter de façon discontinue les 6 dispositifs associés à des colliers de contention par des chiens de particuliers de différentes races d'un poids compris entre 5 et 20 kg particulièrement sensibles au mal des transports. La longueur des dispositifs a été ajustée pour chaque chien en fonction de son poids. Les dispositifs étaient placés sur les animaux par leur maître 24 heures avant le déplacement et retirés à l'arrivée, en prenant bien soin de placer le collier de façon que la bande active soit à l'intérieur du collier pour être en contact avec la peau. Les dispositifs dès leur retrait étaient remis dans leur emballage. Le test a été reproduit plusieurs fois (3 à 5 fois) avec les mêmes chiens et dispositifs. Il n'a été noté aucun vomissement et aucune modification dans le comportement des animaux principalement durant le trajet et à leur arrivée.

Pour avoir une activité antiémétique, on doit avoir une prise journalière de 0,03 mg de L. Hyoscine/kg de poids vif. On détermine expérimentalement la teneur de la bande active, soit 5 % (p/p) afin d'obtenir pendant la période de port du dispositif, de façon continue ou discontinue une quantité de principe actif libérée comprise entre 0,06 et 0,08 mg par cm et par jour.

L'association, matrice-quantité de substance active, permet d'avoir 30 jours d'activité (consécutifs ou discontinus en ayant pris soin de replacer le dispositif dans son conditionnement et de le fermer avec précaution). La libération est linéaire, indépendante de la longueur du dispositif et du port continu ou discontinu.

Dans ce cas, 0,5 cm de dispositif protège 1 kg de poids vif de chien. Ainsi un manchon de :
- 10 cm protège un chien de 20 kg,
- 5 cm protège un chien de 10 kg,
- 1 cm protège un chien de 2 kg.

### EXEMPLE 4 :

De façon similaire à l'exemple 1, des dispositifs cylindriques creux souples identiques à ceux de la figure 7, de section ovale (grand diamètre extérieur du grand côté de l'ovale : 18 mm, grand diamètre intérieur du grand côté de l'ovale : 16,8 mm, petit diamètre extérieur du petit côté de l'ovale : 7,5 mm, petit diamètre intérieur du petit côté de l'ovale : 6,3 mm), de 40 mm de long et de 0,6 mm d'épaisseur de paroi et d'un poids de 6 grammes, ont été réalisés avec une couche intérieure inerte composée de 3,5% de stabilisants et lubrifiants, 37,5% de plastifiant (adipate de diéthyl-2 hexyle) et 59% de chlorure de polyvinyle et une couche extérieure active contenant 20% en poids de phénothrine (2,2-dimethyl-3-(2-méthyl-1-propényl) cyclopropanecarboxylate), 3,5% de stabilisants et lubrifiants, 18,5% de plastifiant (adipate de diéthyl-2 hexyle) et 58% de chlorure de polyvinyle.

La cinétique de libération de la phénothrine a été réalisée en faisant porter 6 dispositifs associés à des colliers en cuir par des chats d'un poids voisin de 3,5 kg. Deux échantillons de 150 mg de dispositif sont prélevés à l'aide d'un emporte-pièce l'un sur la face interne et l'autre sur la face externe sur chaque animal à des temps différents et analysés par chromatographie liquide haute performance.

Dans le Tableau II ci-dessous, les moyennes des valeurs de la phénothrine en pourcentage restant sur la face interne et sur la face externe des dispositifs, sont données.

**TABLEAU II**

| Prélèvement sur la face | Temps donné en jours | | | | | | |
|---|---|---|---|---|---|---|---|
| | 0 | 7 | 14 | 28 | 42 | 56 | 70 |
| interne | 100 | 82,0 | 76,3 | 60,1 | 45,5 | 32,1 | 19,2 |
| externe | 100 | 82,9 | 78,8 | 63,8 | 50,4 | 37,8 | 27,4 |

### EXEMPLE 5 :

De façon similaire à l'exemple 1, des dispositifs cylindriques creux souples identiques à ceux de la figure 11, mais de section en forme de parallélépipède comme illustré à la figure 3 (dimension extérieure du grand côté du parallélépipède : 18 mm, dimension intérieure du grand côté du parallélépipède : 16,8 mm, dimension extérieure du petit côté du parallélépipède : 7,5 mm, dimension intérieure du petit côté du parallélépipède : 6,3 mm), de 80 mm de long et de 0,6 mm d'épaisseur de paroi et d'un poids de 11 grammes, ont été réalisés. La partie (b), corps inerte du dispositif, est composée de 3,5% de stabilisants et lubrifiants, 37,5% de plastifiant (phtalate de diéthyl-2 hexyle) et 59% de chlorure de polyvinyle, les parties (a) et (c), bandes centrales actives de 6 mm de large sont composées de 2,5% de nanaomycine, 3,5% de stabilisants et lubrifiants, 25,5% de plastifiants (phtalate de diéthyl-2 hexyle et phtalate de dibutyle), 20% de charge (silice) et 48,5% de chlorure de polyvinyle.

L'efficacité antifongique et antibactérienne a été prouvée en faisant porter de façon continue pendant la période à risque, les 6 dispositifs associés à des colliers par des chats exempts de teigne. La longueur des dispositifs a été ajustée pour chaque chat en fonction de son poids. Les dispositifs étaient placés sur les animaux avant leur introduction dans une chatterie envahie par la teigne. Les chats ont été retirés de la chatterie un mois après et examinés par fluorescence sous une lampe de Wood. Aucun filament de micélium de *Trychophyton sp.* ou *Microsporum sp* n'a été observé.

### EXEMPLE 6 :

De façon similaire à l'exemple 5, des dispositifs ont été réalisés, contenant dans la partie (b), corps inerte du dispositif, 20% de plastifiant (adipate de diisobutyle), 2% de lubrifiants, 40% de charge (carbonate de calcium), 25% de polyéthylène et 13% de copolymère d'acétate de vinyle/polyéthylène, dans les parties (a) et (c), bandes centrales actives de 3 mm de large, 4,5% de pyriproxyfène, 20% de plastifiant (adipate de diisobutyle), 2% de lubrifiants, 36,5% de charge (carbonate de calcium), 25% de polyéthylène et 12% de copolymère d'acétate de vinyle/polyéthylène.

L'efficacité ovicide a été prouvée en faisant porter de façon continue pendant 5 mois, les 6 dispositifs associés à des colliers par des chats. La longueur des dispositifs a été ajustée pour chaque chat en fonction de son poids. Les dispositifs étaient placés sur les animaux deux jours avant une infestation expérimentale par 20 puces par chat. 3 jours après l'infestation, les oeufs des puces étaient collectés et mis dans l'incubateur. Aucune émergence de puces n'a été enregistrée pour chacun des chats. La même expérience avec des témoins conduit à une éclosion de 50 à 60% des oeufs. Le test a été renouvelé tous les mois pendant cinq mois, aucune émergence de puces n'a été enregistrée.

### EXEMPLE 7 :

De façon similaire à l'exemple 1, des dispositifs, de 100 mm de long, contenant 5% d'un extrait végétal (ester d'acide gras), 3,5% de stabilisants et lubrifiants, 30% de plastifiant (acétyl tributyl citrate), 21,5% de charge (carbonate de calcium) et 40% de chlorure de polyvinyle ont été préparés.

L'activité déodorante a été prouvée en faisant porter de façon continue pendant 4 mois les 6 dispositifs associés à des colliers de contention par des vieux chiens, choisis particulièrement car émetteurs de mauvaises odeurs. Les propriétaires ont noté une nette amélioration odoriférante de l'environnement de leur animal.

### EXEMPLE 8 :

On prépare par extrusion-moulage, de manière classique, des dispositifs cylindriques creux souples, identiques à ceux de la figure 1, de section ovale (dimension extérieure du grand côté de l'ovale : 40 mm, dimension intérieure du grand côté de l'ovale : 36 mm, dimension extérieure du petit côté de l'ovale : 24 mm, dimension intérieure du petit côté de l'ovale : 20 mm), de 150 mm de long et 2,0 mm d'épaisseur de paroi et d'un poids de 43 grammes, contenant 5% en poids de lambda cyhalothrine, 10% de pipéronyl butoxyde, 2% de N,N-diéthyl-m-toluamidine, 3,5% de stabilisants et lubrifiants, 23,5% de plastifiant (adipate d'isobutyle),4% de charge (diatomées) et 52% de chlorure de polyvinyle.

L'efficacité contre les mouches a été prouvée en faisant porter de façon continue pendant les 3 mois d'été, 6 dispositifs associés aux licols de 6 chevaux de selle d'un centre équestre. On a noté très peu de mouches autour de la tête de ces animaux, comparativement aux autres chevaux du centre.

6 autres dispositifs ont été utilisés de façon discontinue. Ils étaient associés à la sous-ventrière lors du sellage de 6 autres chevaux. Les cavaliers ont noté le calme de l'animal mais en plus ils n'étaient pas importunés par les mouches et autres insectes.

6 autres dispositifs ont été portés, associés à leur licou, par 6 bovins pendant l'estivage. Les éleveurs ont noté l'absence d'insectes dans le voisinage de ces bovins mais surtout aucun signe clinique de kérato-conjonctivite, absence de conjonctivite à *Moraxiella bovis.*

## Revendications

1. Dispositif destiné à être fixé sur un animal, du type comprenant au moins une matrice polymérique incluant au moins une substance active, apte à être libérée à partir dudit dispositif vers une zone appropriée d'un organisme animal, lequel dispositif est caractérisé :
- en ce qu'il est constitué d'au moins un élément tubulaire à section quelconque, comportant au moins une couche de matrice polymérique souple contenant au moins une substance active,
- en ce que la longueur dudit élément tubulaire est réglable, pour ajuster la dose journalière de substance active, au poids de l'animal,
- en ce que le rapport entre la surface externe dudit élément tubulaire et l'épaisseur de sa paroi est le plus grand possible, pour l'obtention d'une élimination linéaire de la substance active et
- en ce que ledit élément tubulaire est apte à être associé à n'importe quel support souple ou rigide pour animaux.

2. Dispositif selon la revendication 1, caractérisé en ce qu'il comporte une seule couche de matrice polymérique souple, dans laquelle au moins une substance active est incluse.

3. Dispositif selon la revendication 1, caractérisé en ce qu'il comporte au moins deux couches de matrice polymérique souple (couche extérieure et couche intérieure).

4. Dispositif selon la revendication 3, caractérisé en ce qu'au moins une substance active est incluse dans la couche extérieure.

5. Dispositif selon la revendication 3, caractérisé en ce qu'au moins une substance active est incluse dans la couche intérieure.

6. Dispositif selon la revendication 3, caractérisé en ce qu'au moins une substance active est incluse dans chacune des deux couches de matrice polymérique.

7. Dispositif selon la revendication 3, caractérisé en ce qu'il comprend trois couches de matrice polymérique, à savoir une couche extérieure et une couche intérieure, séparées par une couche intermédiaire, et en ce qu'au moins une substance active est incluse dans la couche intermédiaire.

8. Dispositif selon l'une quelconque des revendications 1 à 7, caractérisé en ce qu'au moins une substance active est répartie, dans une couche de matrice polymérique, de manière homogène.

9. Dispositif selon l'une quelconque des revendications 1 à 8, caractérisé en ce qu'au moins une substance active est concentrée préférentiellement au niveau d'un ou plusieurs fragments d'une des couches de matrice polymérique.

10. Dispositif selon l'une quelconque des revendications 1 à 9, caractérisé en ce qu'il comprend une trame de renfort.

11. Dispositif selon la revendication 10, caractérisé en ce que ladite trame de renfort est positionnée sur la couche extérieure ou bien, dans le cas où ledit dispositif comprend au moins deux couches de matrice polymérique, ladite trame de renfort est prise en sandwich entre deux desdites couches.

12. Procédé de préparation du dispositif selon l'une quelconque des revendications 1 à 11, caractérisé en ce qu'il comprend le mélange et le chauffage des différents composants, suivis de leur mise sous la forme d'un élément tubulaire.

## Claims

1. Device intended to be fixed to an animal, of the type comprising at least one polymeric matrix enclosing at least one active substance capable of being released from the said device towards an appropriate area of an animal organism, which device is characterized:
- in that it is composed of at least one tubular component of any cross-section, containing at least one layer of flexible polymeric matrix containing at least one active substance,
- in that the length of the said tubular component can be regulated, in order to adjust the daily dose of active substance to the weight of the animal,
- in that the ratio of the external surface area of the said tubular component to the thickness of its wall is as great as possible, in order to obtain linear removal of the active substance, and
- in that the said tubular component is capable of being combined with any flexible or rigid support for animals.

2. Device according to Claim 1, characterized in that it contains a single layer of flexible polymeric matrix within which is enclosed at least one active substance.

3. Device according to Claim 1, characterized in that it contains at least two layers of flexible polymeric matrix (external layer and internal layer).

4. Device according to Claim 3, characterized in that at least one active substance is enclosed within the external layer.

5. Device according to Claim 3, characterized in that at least one active substance is enclosed within the internal layer.

6. Device according to Claim 3, characterized in that at least one active substance is enclosed within each of the two layers of polymeric matrix.

7. Device according to Claim 3, characterized in that it comprises three layers of polymeric matrix, namely an external layer and an internal layer, separated by an intermediate layer, and in that at least one active substance is enclosed within the intermediate layer.

8. Device according to any one of Claims 1 to 7, characterized in that at least one active substance is distributed homogeneously within a layer of polymeric matrix.

9. Device according to any one of Claims 1 to 8, characterized in that at least one active substance is concentrated preferentially in one or a number of fragments of one of the layers of polymeric matrix.

10. Device according to any one of Claims 1 to 9, characterized in that it comprises a reinforcing frame.

11. Device according to Claim 10, characterized in that the said reinforcing frame is positioned on she external layer or else, in the case where the said device comprises at least two layers of polymeric matrix, the said reinforcing frame is held as a sandwich between two of the said layers.

12. Process for the preparation of the device according to any one of Claims 1 to 11, characterized in that it comprises mixing and heating the different components, followed by shaping them as a tubular component.

## Patentansprüche

1. Einrichtung, die dazu bestimmt ist, an bzw. auf einem Tier befestigt zu werden, von der Art, welche wenigstens eine Polymermatrize umfaßt, die wenigstens eine aktive Substanz einschließt, welche dazu geeignet ist, ausgehend von dieser Einrichtung nach einer geeigneten Zone eines Tierorganismus freigesetzt zu werden, welche Einrichtung dadurch **gekennzeichnet** ist:
- daß sie von wenigstens einem rohrförmigen Element mit irgendeinem Querschnitt gebildet ist, welches wenigstens eine Schicht der weichen bzw. schmiegsamen Polymermatrize hat, die wenigstens eine aktive Substanz enthält,
- daß die Länge des rohrförmigen Elements zum Einstellen der täglichen Dosis der aktiven Substanz nach dem Gewicht des Tiers regulierbar bzw veränderbar ist,
- daß das Verhältnis zwischen der äußeren Oberfläche des rohrförmigen Elements und der Dicke seiner Wand zum Erhalten eines linearen Ausscheidens der aktiven Substanz das größtmögliche ist, und
- daß das rohrförmige Element dazu geeignet ist, mit irgendeinem weichen bzw. schmiegsamen oder starren Träger für Tiere verbunden zu werden.

2. Einrichtung gemäß Anspruch 1, dadurch **gekennzeichnet,** daß sie eine einzige Schicht von weicher bzw. schmiegsamer Polymermatrize hat, in welcher wenigstens eine aktive Substanz eingeschlossen ist.

3. Einrichtung gemäß Anspruch 1, dadurch **gekennzeichnet,** daß sie wenigstens zwei Schichten von weicher bzw. schmiegsamer Polymermatrize hat (äußere Schicht und innere Schicht).

4. Einrichtung gemäß Anspruch 3, dadurch **gekennzeichnet,** daß wenigstens eine aktive Substanz in der äußeren Schicht eingeschlossen ist.

5. Einrichtung gemäß Anspruch 3, dadurch **gekennzeichnet,** daß wenigstens eine aktive Substanz in der inneren Schicht eingeschlossen ist.

6. Einrichtung gemäß Anspruch 3, dadurch **gekennzeichnet,** daß wenigstens eine aktive Substanz in jeder der beiden Schichten aus Polymermatrize eingeschlossen ist.

7. Einrichtung gemäß Anspruch 3, dadurch **gekennzeichnet,** daß sie drei Schichten von Polymermatrize umfaßt, d.h. eine äußere Schicht und eine innere Schicht, die durch eine Zwischenschicht getrennt sind, und daß wenigstens eine aktive Substanz in der Zwischenschicht eingeschlossen ist.

8. Einrichtung gemäß irgendeinem der Ansprüche 1 bis 7, dadurch **gekennzeichnet,** daß wenigstens eine aktive Substanz in einer Schicht aus Polymermatrize in homogener Weise verteilt ist.

9. Einrichtung gemäß irgeneinem der Ansprüche 1 bis 8, dadurch **gekennzeichnet,** daß wenigstens eine aktive Substanz, vorzugsweise auf dem Niveau von einem oder mehreren Stücken bzw. Fragmenten von einer der Schichten aus Polymermatrize, konzentriert ist.

10. Einrichtung gemäß irgendeinem der Ansprüche 1 bis 9, dadurch **gekennzeichnet,** daß sie ein Verstärkungsraster umfaßt.

11. Einrichtung gemäß Anspruch 10, dadurch **gekennzeichnet,** daß das Verstärkungsraster auf der äußeren Schicht positioniert ist bzw. das Verstärkungsraster in dem Fall, in welchem die Einrichtung wenigstens zwei Schichten aus Polymermatrize umfaßt, zwischen zwei der Schichten positioniert bzw. eingeklemmt ist.

12. Verfahren zum Herstellen der Einrichtung gemäß irgendeinem der Ansprüche 1 bis 11, dadurch **gekennzeichnet,** daß es die Mischung und die Erwärmung bzw. Erhitzung der unterschiedlichen Bestandteile, gefolgt vom Bringen derselben in die Form eines rohrförmigen Elements umfaßt.
